# EUROPÄISCHE PATENTSCHRIFT

(11) **EP 2 480 861 B1**
(45) Veröffentlichungstag und Bekanntmachung des Hinweises auf die Patenterteilung: **17.07.2019**
(21) Anmeldenummer: 10765595.3
(22) Anmeldetag: 23.09.2010
(51) Int. Cl.: G01D 3/036, G01D 5/14, G01D 5/244

(54) **VERFAHREN ZUR AUSWERTUNG VON SIGNALEN EINES WINKELSENSORS**
METHOD FOR ANALYZING SIGNALS FROM AN ANGLE SENSOR
PROCÉDÉ POUR L'ÉVALUATION DE SIGNAUX D'UN CAPTEUR ANGULAIRE

(30) Priorität: 24.09.2009 DE 102009042473
(43) Veröffentlichungstag der Anmeldung: 01.08.2012
(73) Patentinhaber: Continental Automotive GmbH, 30165 Hannover (DE)
(72) Erfinder: WALLRAFEN, Werner, 65719 Hofheim (DE)
(86) Internationale Anmeldenummer: PCT/EP2010/064027
(87) Internationale Veröffentlichungsnummer: WO 2011/036196

(56) Entgegenhaltungen:
- EP-B1- 1 697 697
- DE-A1- 4 319 322
- DE-A1- 10 143 286
- JP-A- 2 307 012
- US-A- 5 463 393

## Beschreibung

Die Erfindung betrifft ein Verfahren zur Auswertung von Signalen eines Winkelsensors mit mindestens zwei Sensorelementen, die eine Ebene aufspannen und mit einem von dieser Ebene beabstandetem und drehbaren Element zur Variation eines Feldes, sowie einen bürstenlose Elektromotor, der nach diesem Verfahren angesteuert wird.

Winkelsensoren werden in vielen Bereichen der Technik benötigt. Insbesondere in der Automobilindustrie werden Winkelsensoren benötigt um z. B. die Lage von Stell- und Drosselklappen, die Stellung variabler Nockenwellensteuerungen, die Stellung von variablen Turbinengeometrie oder die Stellung von Antriebsmotoren für die elektrische Lenkung zu erkennen. Bei bürstenlosen Elektromotoren ist zur Kommutierung des den Elektromotor antreibenden Wechselstromes ein Drehwinkelsensor notwendig, vor allem wenn der bürstenlose Elektromotor hochdynamisch arbeitet, d. h. in verschiedenen Drehzahlbereichen betrieben wird also von sehr geringen Drehzahlen bis zu hohen Drehzahlen und auch der Rückwärtslauf verwendet wird. Hierbei ist es zu jedem Betriebszustand des Elektromotors notwendig, exakt und genau den Drehwinkel des Rotors des Elektromotors zu erfassen, so dass der bürstenlose Elektromotor mit einem dem entsprechend kommutierten Wechselstrom angetrieben werden kann.

Bei den Winkelsensoren sind verschiedene Messprinzipien bekannt. Bei einer Reihe von Messprinzipien wird auf ein sich mit dem Rotor drehendes magnetisches Feld zurückgegriffen, dessen Lage von einem magnetfeldempfindlichen Sensor ausgewertet wird. Sehr gute Messergebnisse erhält man mit Magnetfeldsensoren auf der technologischen Basis des Anisotropen Magnetoresistiven Effektes (AMR-Sensoren). Diese AMR-Sensoren haben jedoch den Nachteil, dass sie nur den halben Vollkreis, also 180° eindeutig darstellen können. Nach 180° wiederholt sich auf Grund der Funktionsweise der AMR-Winkelsensoren das Signal, so dass eine eindeutige Zuordnung der Messsignale zur Stellung des Rotors im Vollkreis unmöglich wird.

Die Vollkreismessung kann z. B. mit so genannten 2-D-Hall-Elementen, GMR-Hall-Messelementen (Giant Magnetoresistive Effect) und TMR-Messelementen (Tunnel Magnetoresistive Effect) sowie induktiven Sensoren erreicht werden. Leider weisen die 360° eindeutig auflösenden Sensortypen 2-D-Hall, GMR, TMR und induktive Sensor eine starke Abhängigkeit der Messsignale vom Abstand des drehbaren Elementes zur Variation des Feldes zur Ebene in der die Messelemente angeordnet sind auf. Daher werden äußere Einflüsse, bei denen dieser Abstand variiert wird, dazu führen, dass die Messergebnisse dieser 2D-Hall-Sensorelemente, GMR, TMR und induktive Sensorelemente mit einem hohen Fehler überlagert sind, der zu sehr schlechten Messergebnissen führt. Diese äußeren Effekte sind z. B. die Summe aller Toleranzen beim Einbau des Winkelsensors in ein System, Temperatureinflüsse, die den Abstand verändern und/oder Schwingungen des Gesamtsystems in dem der Winkelsensor angeordnet ist.

Die DE 101 43 286 A1 betrifft ein Verfahren zur Kompensation eines Ausgangs einer Drehwinkelanordnung, bei der ein erster Magnetfeldsensor so angeordnet wird, dass er um 90° von einem zweiten Magnetfeldsensor orientiert ist.

Aus der EP 1 697 697 B1 ist ein Positionsermittlungssystem zum Ermitteln einer Position eines Läufers eines drehenden Motors sowie ein entsprechendes Positionsermittlungsverfahren bekannt.

Die US 5 463 393 A beschreibt ein Verfahren und eine Vorrichtung zum Korrigieren von Fehlern in einem amplitudenentcodierten Signal.

Aus der JP 2 307 012 A ist ein magnetischer Encoder bekannt. Die DE 43 19 322 A1 betrifft eine Positionsmesseinrichtung mit einem Sensor, dessen Ausgangssignal vom Abstand zwischen einer Messteilung und einer Abtasteinheit abhängig ist.

Es ist daher die Aufgabe der vorliegenden Erfindung, einen bürstenlosen Elektromotor mit einem Winkelsensor mit mindestens zwei Sensorelementen anzugeben, sodass mit vollkreisabbildenden Sensorelementen (z. B 2D-Hall-Sensorelemente, GMR, TMR und induktive Sensorelemente) Messergebnisse von hoher Auflösung produziert werden können. Die Aufgabe wird durch die Merkmale des unabhängigen Patentanspruches 1 gelöst.

Dadurch, dass die Sensorelemente mindestens einen ersten und einen zweiten voneinander linear unabhängigen Vektor des in dieser Ebene anliegenden Feldes erfassen, wobei zusätzlich eine weiter Größe erfasst wird, die abhängig von dem Abstand zwischen der Ebene und dem drehbaren Element ist und wobei mit dem Betrag der weiteren Größe die Amplituden der Signale des ersten und zweiten Sensorelementes gesteuert wird, ist es im gesamten Betrieb des Winkelsensors möglich die Signale des ersten und des zweiten Sensorelements an die Änderungen des Abstandes zwischen der Ebene und dem drehbaren Element anzupassen. Damit werden die Signale des ersten und des zweiten Sensorelements auf den Abstand zwischen der Ebene und dem drehbaren Element normiert. Das erste und das zweite Sensorelement liefern also nach der Normierung Sinus- und Kosinussignale, die einzig von dem Drehwinkel des drehbaren Elements abhängen und die in Ihrer Amplitude weitgehend unabhängig von dem Abstand zwischen der Ebene und dem drehbaren Element sind. Bei einem zu geringen Abstand zwischen der Ebene und dem drehbaren Element wird ein Übersteuern der Analog-Digital-Wandler, und somit ein Beschneiden der Sinus- und Kosinussignale, verhindert.

Ferner wird der von einem Hochpass gefilterte Betrag der weiteren Größe zur Diagnose eines fehlerhaften Rotorlagers des bürstenlosen Elektromotors verwendet.

Bei einer Weiterbildung des bürstenlosen Elektromotors wird der vom dritten Vektor erfasste Betrag des Feldes über einen Tiefpassfilter von Informationen über schnelle Änderungen des Abstandes zwischen der Ebene und dem drehbaren Element befreit. Schnelle Änderungen resultieren zum Beispiel aus einem Lagerspiel des bürstenlosen Elektromotors, aus Vibrationen und/oder aus ruckartigen Drehrichtungsänderungen des Rotors des bürstenlosen Elektromotors. Diese Informationen werden durch den Tiefpassfilter aus dem Signal von dem dritten Vektor gefiltert. Nach dem Tiefpassfilter liegen in dem Signal von dem dritten Vektor nur Informationen über langsame Änderungen des Abstandes zwischen der Ebene und dem drehbaren Element vor. Dies sind z.B. die Summe aller mechanischen Einbautoleranzen und/oder temperaturbedingte Abstandsänderungen zwischen der Ebene und dem drehbaren Element, Änderungen der Empfindlichkeit der Sensorelemente und/oder deren Auswerteschaltung, sowie Änderungen der von dem drehbaren Element ausgehenden Feldstärke.

Bei einer Ausgestaltung der Erfindung ist das drehbare Element ein Magnet, eine Spule, ein Joch oder ein Metallblech. Mit solchen Elementen ist es sehr einfach ein Magnetfeld mit dem Rotor des bürstenlosen Elektromotors zu drehen, um den Drehwinkel des Rotors des bürstenlosen Elektromotors zu erfassen. Dazu sind die Sensorelemente magnetfeldempfindlich auszubilden. Vorteilhaft ist es, wenn die magnetfeldempfindlichen Sensorelemente als Gigant Magnetoresistive Sensorelemente (GMR), Tunnel Magnetoresistive Sensorelemente (TMR) oder Hallsensorelemente ausgebildet sind, da diese Sensorelemente eine volle Drehung des Magnetfeldes eindeutig erfassen können.

Bei einer Ausgestaltung der Erfindung nehmen die Sensorelemente elektromagnetische Felder auf, wobei die Sensorelemente als induktive Sensorelemente ausgebildet sind. Auch mit induktiven Sensorelementen ist eine eindeutige Erfassung des Vollkreises der Rotordrehung möglich.

Bei einer Weiterbildung werden aus den Signalen des ersten und des zweiten voneinander linear unabhängigen Vektors Sinus- und Kosinussignale erzeugt. Dies erfolgt vorteilhafter Weise im CORDIC-Algorithmus (COordinate Rotation DIgital Computer) .

Bei einer nächsten Weiterbildung werden die analogen Signale der Vektoren über einen Analog-Digital-Wandler digitalisiert. Dadurch, dass die Signale des ersten und des zweiten linear unabhängigen Vektors durch das Signal des Abstandes zwischen der Ebene und dem drehbaren Element normiert sind, ist immer die höchste Auflösung des Analog-Digital-Wandlers nutzbar, ohne dass die Gefahr besteht die Signale des ersten und des zweiten linear unabhängigen Vektors durch ein Übersteuern des Analog-Digital-Wandler zu beschneiden oder dass Signale mit zu kleiner Amplitude zu dem Analog-Digital-Wandler gesendet werden.

Die Erfindung lässt zahlreiche Ausführungsformen zu. Zur weiteren Verdeutlichung der Erfindung sind mehrere davon in der Zeichnung dargestellt und werden nachfolgend beschrieben. Diese zeigt in
- Figur 1: einen Winkelsensor mit einem Rotor auf dem ein drehbares Element zur Variation eines Feldes angeordnet ist,
- Figur 2: die Ausgangssignale des ersten Sensorelementes und des zweiten Sensorelementes bei konstantem Abstand,
- Figur 2a: das Ausgangssignal des ersten Sensorelementes oder des zweiten Sensorelementes für unterschiedliche Abstände,
- Figur 3: eine Winkelsensor, der auf dem Prinzip der elektromagnetischen Induktion eines Feldes in dem ersten Sensorelement und dem zweiten Sensorelement basiert,
- Figur 4: ein 3-D-Hallelement,
- Figur 5: das Verfahren zur Auswertung von Signalen eines Winkelsensors mit einem 3-Dimensionalen-Hallelement,
- Figur 6: das Verfahren zur Auswertung von Signalen eines Winkelsensors mit einem 2-Dimensionalen-Hallelement,
- Figur 7: das Verfahren zur Auswertung von Signalen eines Winkelsensors mit induktiven Sensorelementen,
- Figur 8: eine Darstellung eines möglichen Gesamtsystems.

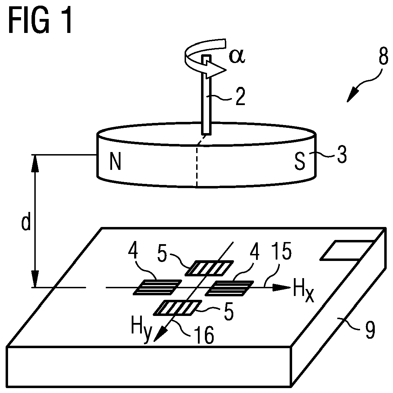

Figur 1 zeigt einen Winkelsensor 8 mit einem Rotor 2, z.B. eines bürstenlosen Elektromotors, auf dem ein drehbares Element 3 zur Variation eines Feldes angeordnet ist. Das drehbare Element 3 ist hier als Dipolmagnet ausgeführt, wobei der Nordpol N und der Südpol S eingezeichnet ist. Je nach Drehwinkel α des Rotors 2 relativ zum bürstenlosen Elektromotor wird in dem Sensorchip 9 des Winkelsensors 8 ein erster linear unabhängiger Vektor 15 der Feldstärke, die hier mit H_{X} bezeichnet ist, und ein zweiter linear unabhängiger Vektor 16 der Feldstärke, die hier mit H_{Y} bezeichnet ist, induziert. Diese Vektoren 15, 16 werden zum Beispiel von einem Magnetfeld erzeugt und sind streng abhängig vom Drehwinkel α und der damit verbundenen Lage des drehbaren Elementes 3. Das erste Sensorelement 4, das hier als vertikales Hall-Element ausgeführt ist, sowie das zweite Sensorelement 5, das ebenfalls als vertikales Hall-Element in dem Sensorchip 9 ausgeführt ist, erfasst die Komponenten des ersten linear unabhängigen Magnetfeldvektors 15 und des zweiten linear unabhängigen Magnetfeldvektors 16. Der Betrag der linear unabhängigen Magnetfeldvektoren 15 und 16 ist besonders stark abhängig von dem Abstand d zwischen der Ebene in der das erste Sensorelement 4 und das zweite Sensorelement 5 angeordnet ist und der Ebene in der das drehbare Element 3 zur Variation des Magnetfeldes rotiert. Wenn der Abstand d des drehbaren Elementes 3 zum Sensorchip 9, auf dem das erste Sensorelement 4 und das zweite Sensorelement 5 angeordnet ist, geringer wird, werden in den Sensorelementen 4, 5 höhere Hallspannungen erzeugt und wenn der Abstand d zwischen dem drehbaren Element 3 und den Sensorchip 9 größer wird, werden wesentlich geringere Hallspannungen in dem ersten Sensorelement 4 und dem zweiten Sensorelement 5 erzeugt. Damit werden die ungesteuerten Ausgangsignale des ersten Sensorelementes 4 und des zweiten Sensorelementes 5 teilweise unbrauchbar für die weitere Signalverarbeitung, da sie entweder zu klein sind, um z.B. die volle Auflösung eines Analog-Digital-Wandlers auszunutzen oder so groß sind, das ein z.B. ein Analog-Digital-Wandler übersteuert wird, wobei ein Teil des Signals abgeschnitten wird.

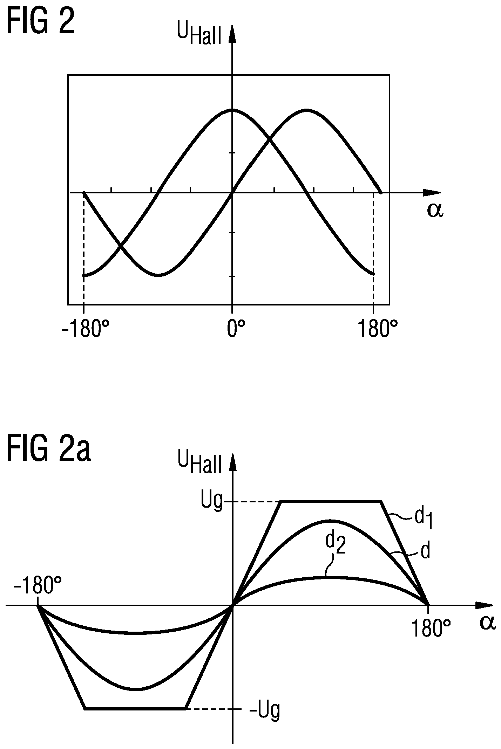

Diese Situation wird nachfolgend in Figur 2a noch näher dargestellt.

Figur 2 zeigt die sinus- und kosinusförmigen Ausgangssignale des ersten Sensorelementes 4 und des zweiten Sensorelementes 5 bei konstantem Abstand d zwischen dem drehbaren Element 3 und dem Sensorchip 9 der die Ebene bildet, in der das erste Sensorelement 4 und das zweite Sensorelement 5 angeordnet ist. In Figur 2 sind saubere Sinus- und Kosinusverläufe für die Hallspannung U_{Hall} zu erkennen, die eine eindeutige Auflösung des Drehwinkels α zwischen -180° und +180° zulassen, womit der Vollkreis durch den hier angegebenen Winkelsensor 8 vollständig und eindeutig erfassbar ist.

Figur 2a zeigt das Ausgangssignal des ersten Sensorelementes 4 oder des zweiten Sensorelementes 5 für unterschiedliche Abstände d, d₁, d₂ zwischen dem drehbaren Element 3 und der Ebene des ersten Sensorelementes 4 und des zweiten Sensorelementes 5. Mit d ist hier der optimale Abstand bezeichnet, d₁ bezeichnet einen geringeren als den optimalen Abstand und d₂ bezeichnet einen größeren als den optimalen Abstand zwischen dem drehbaren Element 3 und der Ebene des ersten Sensorelementes und des zweiten Sensorelementes 5. Der Einfachheit halber ist in Figur 2a nur der Sinusverlauf des Signals des ersten Sensorelementes 4 dargestellt, wobei sich der Kosinusverlauf des Signals des zweiten Sensorelementes 5 analog verhalten würde. Bei einem optimalen Abstand d zwischen dem drehbaren Element 3 und der Ebene des ersten Sensorelementes 4 und des zweiten Sensorelementes 5 ergibt sich die schon bekannte Sinusfunktion, die in Figur 2a mit dem Bezugszeichen d gekennzeichnet ist. Vergrößert man nun den Abstand zwischen dem drehbaren Element 3 und der Ebene des ersten Sensorelementes 4 und des zweiten Sensorelementes 5, so ergibt sich ein wesentlich flacherer Verlauf der Sinusfunktion, die hier in Figur 2a mit dem Bezugszeichen d₂ gekennzeichnet ist. Da die Auswertung der vom Winkelsensor 8 gelieferten Signale in der Regel über einen Analog-Digital-Wandler erfolgt, würde hier durch den sehr flachen Verlauf der Sinuskurve ein großer dynamischer Bereich des Analog-Digital-Wandlers ungenutzt bleiben und somit die Messergebnisse verschlechtert werden, da mit einem kleineren Bereich digitaler Werte auch weniger Auflösung erreicht werden kann. Bei einer wesentlichen Verringerung des Abstandes d₁ zwischen dem drehbaren Element 3 und der Ebene des ersten Sensorelementes 4 und des zweiten Sensorelementes 5 ergibt sich die in Figur 2a mit d₁ gekennzeichnete Situation. Das hier zu erkennende Sinussignal wird bei einer Grenzspannung U_{g} abgeschnitten, da der nachfolgende Analog-Digital-Wandler übersteuert wird, wodurch sich in weiten Drehwinkelbereichen überhaupt keine Auflösung des Drehwinkels des Rotors 2 mehr erzielen lässt. Sowohl der erhöhte Abstand d₂ als auch der verringerte Abstand d₁ zwischen dem drehbaren Element 3 und der Ebene des ersten Sensorelementes 4 und des zweiten Sensorelementes 5 führen zu sehr schlechten Messergebnissen, die im Rahmen einer automobiltechnischen Anwendung des Winkelsensors 8 nicht akzeptabel sind.

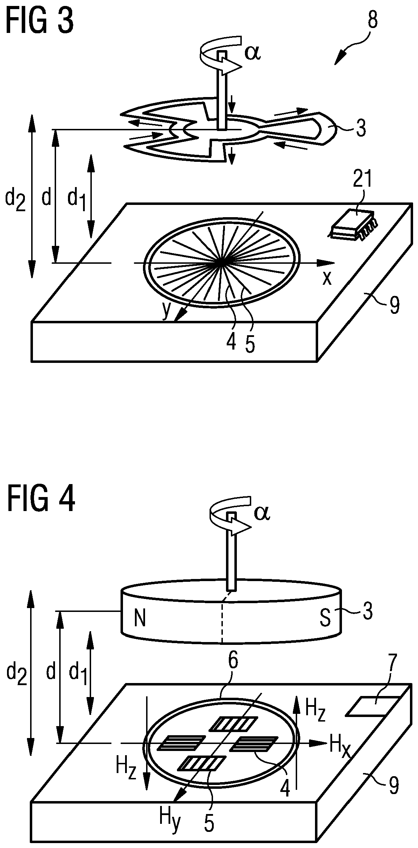

Figur 3 zeigt eine Winkelsensor 8, der auf dem Prinzip der elektromagnetischen Induktion eines Feldes in dem ersten Sensorelement 4 und dem zweiten Sensorelement 5 basiert. Die Sensorelemente 4, 5 sind als Spulenanordnungen z.B. auf einer Leiterplatte 9 ausgebildet. Das drehbare Element 3 ist hier zur Variation eines elektromagnetischen Feldes ausgebildet und mit dem hier nicht dargestellten Rotor 2 des bürstenlosen Elektromotors 1 verbunden ist. Bei der Drehung des drehbaren Elementes 3 wird das elektromagnetische Feld von dem ersten Sensorelement 4 und des zweiten Sensorelement 5 erfasst, die hier als Spulenpaare auf einer Sensorleiterplatte 9 ausgebildet sind. In einem integrierten Schaltkreis 21 auf der Sensorleiterplatte 9 befindet sich die Auswertelektronik für die Signale des ersten Sensorelementes 4 und des zweiten Sensorelementes 5. Diese Auswertelektronik besteht aus Verstärkern 10, gesteuerten Verstärkern 11, die auch als Operationsverstärker bezeichnet werden, Tiefpässen 12, Hochpässen 13, und Inverter 14.

Figur 4 zeigt den prinzipiell aus Figur 1 bekannten Aufbau eines 2-D-Hallelementes erweitert um eine dritte Dimension hin zum 3-D-Hallelement. Auf dem Sensorchip 9 findet sich das erste Sensorelement 4 und das zweite Sensorelement 5, die mit dem Sensorchip 9 die Ebene bilden, in der das Magnetfeld vermessen wird, das von dem Element 3 zur Variation des Magnetfeldes induziert wird. Das Element 3 zur Variation des Magnetfeldes ist hier als Permanentmagnet mit einem Nordpol N und einem Südpol S ausgebildet. Darüber hinaus findet sich ein drittes Sensorelement 6, wodurch sich der hier gezeigte Sensorchip 9 zu einem sogenannten 3-Dimensionalen-Hallelement (3-D-Hallelement) erweitert wird. Darüber hinaus ist in dem Sensorchip 9 ein Temperatursensorelement 7 integriert. Dieses Temperatursensorelement 7 misst die im Winkelsensor 8 herrschende Temperatur. Temperaturveränderungen im Winkelsensorelement 8, insbesondere in den Sensorelementen 4, 5 und 6, können zur massiven Veränderung der von den Sensorelementen 4, 5 und 6 erzeugten Signale führen.

Das Verfahren zur Auswertung von Signalen eines Winkelsensors 8 mit mindestens zwei Sensorelementen 4 und 5, die eine Ebene aufspannen, und mit einem von dieser Ebene beabstandetem und drehbaren Element 3 zur Variation des Feldes wird in den nachfolgenden Figuren näher erläutert.

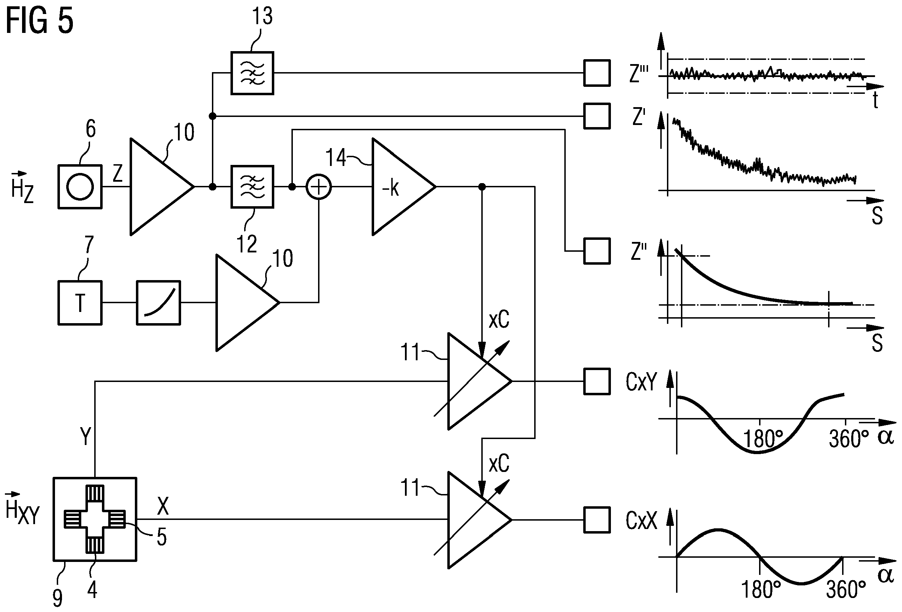

In Figur 5 erfassen die Sensorelemente 4 und 5 mindestens einen ersten und einen zweiten voneinander unabhängigen Vektor 15 und 16 des in dieser Ebene anliegenden Feldes H_{X}, H_{Y}. Zusätzlich wird ein dritter, zu dem ersten und dem zweiten Vektor 15 und 16 linear unabhängiger Vektor 17 erfasst, der den Betrag des Feldes H_{Z} in z-Richtung repräsentiert, wobei dieser Betrag abhängig von dem Abstand d zwischen der Ebene und dem drehbaren Element 3 ist, und wobei mit diesem Betrag die Amplitude der Signale der Sensorelemente 4 und 5 gesteuert wird. Das erste Sensorelement 4 und das zweite Sensorelement 5 sind hier in der Ebene des Sensorchips 9 angeordnet. Die von dem ersten Sensorelement 4 und dem zweiten Sensorelement 5 erfassten Magnetfeldvektoren 15 und 16 werden als elektrische Signale zu den steuerbaren Verstärkern 11. Diese steuerbaren Verstärker 11 sind in der Regel als Operativverstärker ausgebildet. Da nun die von dem ersten Sensorelement 4 und dem zweiten Sensorelement 5 erfassten Signale stark abhängig von dem Abstand d des drehbaren Elementes 3 zur Ebene des Sensorchips 9 sind, wird der Abstand d von dem dritten Sensorelement 6 erfasst, das hier die z-Komponente des magnetischen Feldes H_{Z} misst. Das vom dritten Sensorelement 6 erfasste Signal wird über einen ersten Verstärker 10 und einen Tiefpassfilter 12, der hochfrequente Signale wegfiltert, zu einem analogen Inverter 14 geführt, womit hier Steuergrößen für die steuerbaren Verstärker 11 zur Verfügung stehen, mit denen die Signalstärke dem ersten Sensorelement 4 und dem zweiten Sensorelement 5 entsprechend des Abstandes d, d₁, d₂ zwischen dem drehbaren Element 3 und der Ebene des Sensorchips nachgeführt wird. Diese korrigierten Signale vom ersten Sensorelement 4 und dem zweiten Sensorelement 5 werden dann Analog-Digital-Wandlern 18 zur Verfügung gestellt, die damit immer im vollen Bereich ihrer Auflösung und Bandbreite arbeiten können, ohne dabei übersteuert zu werden. Darüber hinaus wird bei diesem Verfahren die Temperatur T vom Temperatursensorelement 7 erfasst, die innerhalb des Winkelsensors 8 herrscht. Dieser Temperaturmesswert kann ebenfalls über einen Verstärker 10 in die Korrektur der Signale vom ersten Sensorelement 4 und dem zweiten Sensorelement 5 einbezogen werden. Durch das erfindungsgemäße Verfahren ist eine vollständige Korrektur von Abstandsschwankungen und Temperaturschwankungen innerhalb des Winkelsensors 8 möglich, wodurch vollkreisabbildende Winkelsensorelemente kostengünstig im Rahmen automobiler Anwendungen eingesetzt werden können. Weiterhin zeigt Figur 5 einen Hochpassfilter 13. Dargestellt sind die verfügbaren Signale. Aus dem Signal des dritten Sensorelementes 6 kann nach Verstärkung 10 und Hochpassfilterung 13 eine schnelle Abstandsänderung zwischen dem drehbaren Element 3 und dem Sensorchip 9 festgestellt werden. Diese schnelle Abstandsänderung würde z. B. ein Hinweis auf ein defektes Lager des Rotors 2 im bürstenlosen Elektromotor 1 geben. Die Tiefpassfilterung 12 des Signals vom dritten Sensorelement 6 erzeugt ein Signal für eine langsame Abstandsänderung d zwischen dem drehbaren Element 3 und der Ebene des Sensorchips 9. Diese langsame Abstandsänderung kann z. B. durch eine Temperaturdehnung des Gesamtsystems ausgelöst sein.

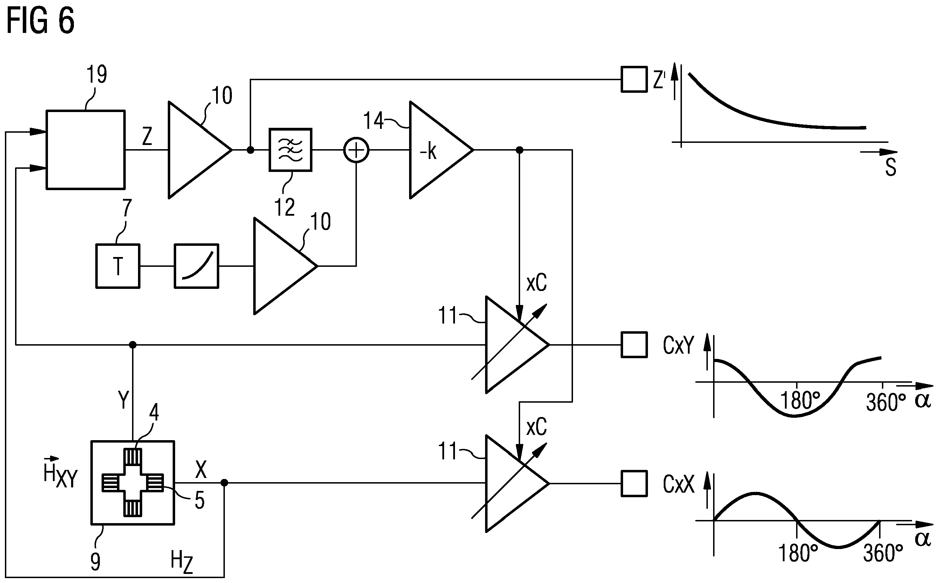

Figur 6 zeigt eine weitere Ausgestaltung der Erfindung. Hier wird die vom Abstand d, d₁, d₂ abhängige weitere Größe 17 aus dem ersten und dem zweiten voneinander linear unabhängigen Vektor 15, 16, die von den Sensorelementen 4, 5 erfasste werden, abgeleitet. Dazu wird zum Beispiel in einer Rechenschaltung 19 der resultierende Betrag des ersten und zweiten linear unabhängigen Vektors 15, 16 über den Satz des Pythagoras gebildet. Die Beträge der einzelnen linear unabhängigen Vektoren 15, 16, die als Sinus- und Kosinussignale zeitlich dargestellt werden, sind bei kleinerem Abstand d₁ zwischen dem drehbaren Element 3 und der Ebene des ersten Sensorelementes 4 und des zweiten Sensorelementes 5 größer und verringern sich mit zunehmendem Abstand. Damit kann die Rechenschaltung 19 eine weitgehend winkelunabhängige Information über den Abstand d zwischen dem drehbaren Element 3 und der Ebene des ersten Sensorelementes 4 und des zweiten Sensorelementes 5 liefern.

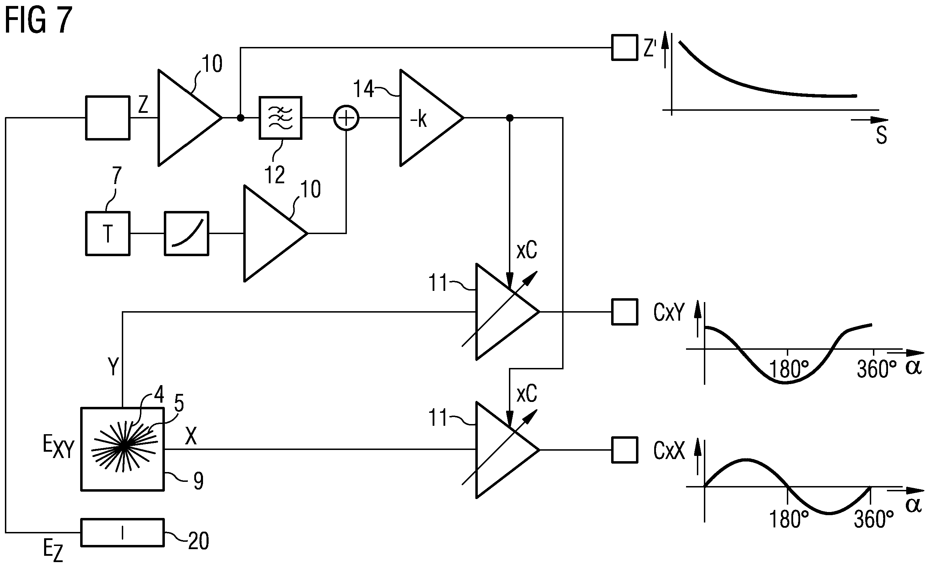

Figur 7 zeigt eine nächste Ausgestaltung der Erfindung. Die weitere, vom Abstand den Abstand d zwischen dem drehbaren Element 3 und der Ebene des ersten Sensorelementes 4 und des zweiten Sensorelementes 5 abhängige Größe 17 wird hier aus dem Versorgungsstrom 20 zum betreiben der induktiven Sensorelemente 4, 5 abgeleitet. Für das induktive Messverfahren wird ein elektromagnetisches Wechselfeld erzeugt, womit im drehbaren Element 3 ein Wirbelstrom induziert wird. Der Betrag des Wirbelstromes steigt mit kleiner werdendem Abstand d und sinkt mit größer werdendem Abstand d. Die Beträge der linear unabhängigen Vektoren 15, 16 in ihrer zeitlichen Darstellung als Sinus- und Kosinussignale werden ebenfalls mit kleinerem Abstand d₁ größer und sinken mit größerem Abstand d₂. Auch damit kann die Rechenschaltung 19 eine weitgehend winkelunabhängige Information über den Abstand d zwischen dem drehbaren Element 3 und der Ebene des ersten Sensorelementes 4 und des zweiten Sensorelementes 5 liefern.

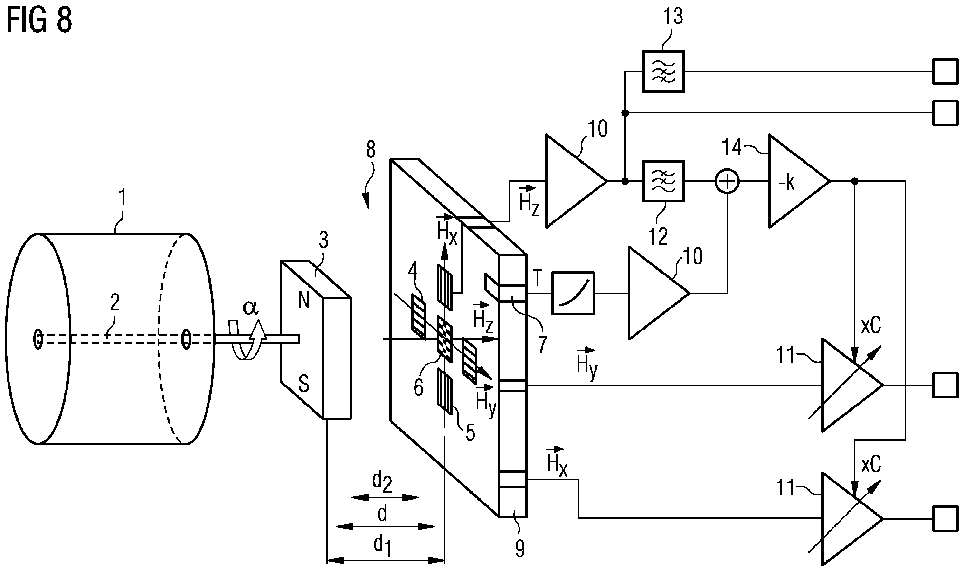

Die Darstellung eines möglichen Gesamtsystems findet sich in Figur 8. Hier ist ein bürstenloser Elektromotor 1 mit einem Rotor 2 dargstellt, wobei auf dem Rotor 2 das drehbare Element 3 zur Variation eines Magnetfeldes angeordnet ist. Entsprechend des Drehwinkels α wird das drehbare Element 3 ein charakteristisches magnetisches Feld im Sensorchip 9 induzieren. Dieses charakteristische Magnetfeld wird von dem ersten Sensorelement 4, dem zweiten Sensorelement 5 und dem dritten Sensorelement 6 aufgenommen. Der Abstand zwischen dem drehbaren Element 3 und dem Sensorchip 9 kann variieren, was hier durch die Bezugszeichen d₂, d₁ und d₀ dargestellt ist. Diese Variation des Abstandes d zwischen dem drehbaren Element 3 und der Ebene, in der das erste Sensorelement 4 und das zweite Sensorelement 5 angeordnet ist, wird durch den Magnetfeldanteil H_{Z} vom dritten Sensorelement 6 erfasst. Damit liefert das dritte Sensorelement 6 einen Korrekturwert H_{Z}, der über den Erstverstärker 10 und einen Tiefpassfilter 12 sowie einen Inverter 14 zu den steuerbaren Verstärkern 11 geführt wird.

Die Magnetfeldwerte H_{Y} und H_{Z} werden von dem ersten Sensorelement 4 und dem zweiten Sensorelement 5 erfasst, womit das erste Sensorelement 4 einen ersten linear unabhängigen Vektor 15 und das zweite Sensorelement 5 einen zweiten linear unabhängigen Vektor 16 erfasst. Aus der Kombination dieser zwei linear unabhängigen Vektoren kann über einen Kordigalgorythmus eindeutig auf den Winkel α geschlossen werden. Die Abstandsabhängigkeit zwischen dem drehbaren Element 3 und dem Sensorchip 9 wird in den steuerbaren Verstärkern 11 korrigiert, womit eine eindeutige und messtechnisch hohe Auflösung des 360° Vollkreises mit den hier dargestellten Winkelsensor 8 möglich ist.

## Patentansprüche

1. Bürstenloser Elektromotor (1), mit:
- einem Rotor (2),
- einem auf dem Rotor (2) angeordneten drehbaren Element (3) zur Variation eines Feldes, und
- einem Winkelsensor (8), der mindestens zwei Sensorelemente (4, 5) aufweist, die eine Ebene aufspannen, wobei die Sensorelemente (4, 5) mindestens einen ersten und einen zweiten voneinander linear unabhängigen Vektor (15, 16) des in dieser Ebene anliegenden Feldes erfassen und wobei zusätzlich eine weitere Größe (17) erfasst wird, die abhängig von dem Abstand zwischen der Ebene und dem drehbaren Element (3) ist und wobei mit dem Betrag der weiteren Größe (17) die Amplituden der Signale des ersten und zweiten Sensorelementes (4, 5) gesteuert wird, wobei die weitere Größe (17) aus einem dritten, zu dem ersten und zweiten Vektor (15, 16) linear unabhängigen Vektor abgeleitet wird,
**dadurch gekennzeichnet, dass** der von einem Hochpass (13) gefilterte Betrag der weiteren Größe (17) zur Diagnose eines fehlerhaften Rotorlagers des bürstenlosen Elektromotors (1) verwendet wird.

2. Bürstenloser Elektromotor (1) nach Anspruch 1, **dadurch gekennzeichnet, dass** der Betrag der weiteren Größe (17) zur Diagnose eines fehlerhaften Abstandes (d) zwischen der Ebene und dem drehbaren Element (3) verwendet wird.

3. Bürstenloser Elektromotor (1) nach einem der Ansprüche 1 oder 2, **dadurch gekennzeichnet, dass** das drehbare Element (3) ein Magnet, eine Spule, ein Joch oder ein Metallblech ist.

4. Bürstenloser Elektromotor (1) nach einem der Ansprüche 1 oder 2, **dadurch gekennzeichnet, dass** die Sensorelemente (4, 5, 6) magnetfeldempfindlich ausgebildet sind.

5. Bürstenloser Elektromotor (1) nach Anspruch 3, **dadurch gekennzeichnet, dass** die Sensorelemente (4, 5, 6) als Gigant Magnetoresistive Sensorelemente (GMR), Tunnel Magnetoresistive Sensorelemente (TMR) oder Hallsensorelemente ausgebildet sind.

6. Bürstenloser Elektromotor (1) nach einem der Ansprüche 1 oder 2, **dadurch gekennzeichnet, dass** die Sensorelemente (4, 5, 6) elektromagnetische Felder aufnehmen.

7. Bürstenloser Elektromotor (1) nach Anspruch 6, **dadurch gekennzeichnet, dass** die Sensorelemente (4, 5, 6) als induktive Sensorelemente ausgebildet sind.

8. Bürstenloser Elektromotor (1) nach Anspruch 7, **dadurch gekennzeichnet, dass** die induktiven Sensorelemente (4, 5, 6) als Spulen ausgebildet sind.

9. Bürstenloser Elektromotor (1) nach einem der Ansprüche 1 oder 2, **dadurch gekennzeichnet, dass** der Winkelsensor (8) einen Vollkreis eindeutig erfasst.

10. Bürstenloser Elektromotor (1) nach einem der Ansprüche 1 oder 2, **dadurch gekennzeichnet, dass** aus den Signalen des ersten und des zweiten voneinander linear unabhängigen Vektors (15, 16) Sinus- und Kosinussignale erzeugt werden.

11. Bürstenloser Elektromotor (1) nach einem der vorgenannten Ansprüche, **dadurch gekennzeichnet, dass** die analogen Signale der Vektoren über einen Analog-Digital-Wandler (18) digitalisiert werden.

12. Bürstenloser Elektromotor (1) nach Anspruch 1, **dadurch gekennzeichnet, dass** die weitere Größe (17) aus den Beträgen des ersten und zweiten voneinander linear unabhängigen Vektors (15, 16) abgeleitet wird.

13. Bürstenloser Elektromotor (1) nach Anspruch 1, **dadurch gekennzeichnet, dass** die weitere Größe (17) aus dem Betrag des Versorgungsstromes (20) zum Betreiben des ersten und zweiten Sensorelementes (4, 5) abgeleitet wird.

14. Bürstenloser Elektromotor (1) nach einem der vorgenannten Ansprüche, **dadurch gekennzeichnet, dass** das drehbare Element (3) zentrisch auf einer Rotorachse (2) des bürstenlosen Elektromotors (1) angeordnet ist.

## Claims

1. Brushless electric motor (1), having:
- a rotor (2),
- a rotatable element (3) which is arranged on the rotor (2) and has the purpose of varying a field, and
- an angle sensor (8) which has at least two sensor elements (4, 5) which span a plane,
wherein the sensor elements (4, 5) sense at least a first and a second vector (15, 16), linearly independent of one another, of the field in this plane, and wherein in addition a further variable (17) is sensed which is dependent on the distance between the plane and the rotatable element (3), and wherein the amplitudes of the signals of the first and second sensor elements (4, 5) are controlled with the absolute value of the further variable (17), wherein the further variable (17) is derived from a third vector which is linearly independent of the first and second vectors (15, 16),
**characterized in that** the absolute value of the further variable (17) which is filtered by a high-pass filter (13) is used to diagnose a faulty rotor bearing of the brushless electric motor (1).

2. Brushless electric motor (1) according to Claim 1, **characterized in that** the absolute value of the further variable (17) is used to diagnose an incorrect distance (d) between the plane and the rotatable element (3).

3. Brushless electric motor (1) according to one of Claims 1 and 2, **characterized in that** the rotatable element (3) is a magnet, a coil, a yoke or a piece of sheet metal.

4. Brushless electric motor (1) according to one of Claims 1 and 2, **characterized in that** the sensor elements (4, 5, 6) are of magnetic-field-sensitive design.

5. Brushless electric motor (1) according to Claim 3, **characterized in that** the sensor elements (4, 5, 6) are embodied as giant magnetoresistive sensor elements (GMR), tunnel magnetoresistive sensor elements (TMR) or Hall sensor elements.

6. Brushless electric motor (1) according to one of Claims 1 and 2, **characterized in that** the sensor elements (4, 5, 6) pick up electromagnetic fields.

7. Brushless electric motor (1) according to Claim 6, **characterized in that** the sensor elements (4, 5, 6) are embodied as inductive sensor elements.

8. Brushless electric motor (1) according to Claim 7, **characterized in that** the inductive sensor elements (4, 5, 6) are embodied as coils.

9. Brushless electric motor (1) according to one of Claims 1 and 2, **characterized in that** the angle sensor (8) clearly senses a full circle.

10. Brushless electric motor (1) according to one of Claims 1 and 2, **characterized in that** sine signals and cosine signals are generated from the signals of the first and second vectors (15, 16) which are linearly independent of one another.

11. Brushless electric motor (1) according to one of the abovementioned claims, **characterized in that** the analog signals of the vectors are digitized by means of an analog/digital converter (18).

12. Brushless electric motor (1) according to Claim 1, **characterized in that** the further variable (17) is derived from the absolute values of the first and second vectors (15, 16) which are linearly independent of one another.

13. Brushless electric motor (1) according to Claim 1, **characterized in that** the further variable (17) is derived from the absolute value of the supply current (20) for operating the first and second sensor elements (4, 5).

14. Brushless electric motor (1) according to one of the abovementioned claims, **characterized in that** the rotatable element (3) is arranged centrically on a rotor axis (2) of the brushless electric motor (1).

## Revendications

1. Moteur électrique sans balai (1), comprenant :
- un rotor (2),
- un élément rotatif (3) disposé sur le rotor (2) et servant à faire varier un champ, et
- un capteur d'angle (8), qui possède au moins deux éléments de détection (4, 5) couvrant un plan, les éléments de détection (4, 5) détectant au moins un premier et un deuxième vecteur (15, 16) linéairement indépendants l'un de l'autre du champ reposant dans ce plan et une grandeur supplémentaire (17) étant en plus acquise, laquelle est dépendante de l'écart entre le plan et l'élément rotatif (3) et les amplitudes des signaux des premier et deuxième éléments de détection (4, 5) étant commandées avec la valeur de la grandeur supplémentaire (17), la grandeur supplémentaire (17) étant dérivée d'un troisième vecteur linéairement indépendant des premier et deuxième vecteurs (15, 16),
**caractérisé en ce que** la valeur de la grandeur supplémentaire (17), filtrée par un filtre passe-haut (13), est utilisée pour le diagnostic d'un palier de rotor défectueux du moteur électrique sans balai (1).

2. Moteur électrique sans balai (1) selon la revendication 1, **caractérisé en ce que** la valeur de la grandeur supplémentaire (17) est utilisée pour le diagnostic d'un écart (d) incorrect entre le plan et l'élément rotatif (3).

3. Moteur électrique sans balai (1) selon l'une des revendications 1 ou 2, **caractérisé en ce que** l'élément rotatif (3) est un aimant, une bobine, une culasse ou une tôle métallique.

4. Moteur électrique sans balai (1) selon l'une des revendications 1 ou 2, **caractérisé en ce que** les éléments de détection (4, 5, 6) sont réalisés de façon à être sensibles aux champs magnétiques.

5. Moteur électrique sans balai (1) selon la revendication 3, **caractérisé en ce que** les éléments de détection (4, 5, 6) sont réalisés sous la forme d'éléments de détection magnétorésistifs géants (GMR), d'éléments de détection magnétorésistifs en tunnel (TMR) ou d'éléments de détection à effet Hall.

6. Moteur électrique sans balai (1) selon l'une des revendications 1 ou 2, **caractérisé en ce que** les éléments de détection (4, 5, 6) enregistrent les champs électromagnétiques.

7. Moteur électrique sans balai (1) selon la revendication 6, **caractérisé en ce que** les éléments de détection (4, 5, 6) sont réalisés sous la forme d'éléments de détection inductifs.

8. Moteur électrique sans balai (1) selon la revendication 7, **caractérisé en ce que** les éléments de détection (4, 5, 6) inductifs sont réalisés sous la forme de bobines.

9. Moteur électrique sans balai (1) selon l'une des revendications 1 ou 2, **caractérisé en ce que** le capteur d'angle (8) acquiert univoquement un cercle complet.

10. Moteur électrique sans balai (1) selon l'une des revendications 1 ou 2, **caractérisé en ce que** des signaux sinusoïdaux et cosinusoïdaux sont générés à partir des signaux des premier et deuxième vecteurs (15, 16) linéairement indépendants l'un de l'autre.

11. Moteur électrique sans balai (1) selon l'une des revendications précédentes, **caractérisé en ce que** les signaux analogiques des vecteurs sont numérisés par le biais d'un convertisseur analogique/numérique (18).

12. Moteur électrique sans balai (1) selon la revendication 1, **caractérisé en ce que** la grandeur supplémentaire (17) est dérivée à partir des valeurs des premier et deuxième vecteurs (15, 16) linéairement indépendants l'un de l'autre.

13. Moteur électrique sans balai (1) selon la revendication 1, **caractérisé en ce que** la grandeur supplémentaire (17) est dérivée à partir de la valeur du courant d'alimentation (20) servant à faire fonctionner les premier et deuxième éléments de détection (4, 5).

14. Moteur électrique sans balai (1) selon l'une des revendications précédentes, **caractérisé en ce que** l'élément rotatif (3) est disposé centré sur un axe de rotation (2) du moteur électrique sans balai (1).
